(19) Europäisches Patentamt

European Patent Office

Office européen des brevets

(11) **EP 1 150 186 B1**

(12) **EUROPÄISCHE PATENTSCHRIFT**

(45) Veröffentlichungstag und Bekanntmachung des Hinweises auf die Patenterteilung:
**30.08.2006 Patentblatt 2006/35**

(51) Int Cl.:
***G05B 13/02*** *(2006.01)*

(21) Anmeldenummer: **01890030.8**

(22) Anmeldetag: **07.02.2001**

(54) **Modellbasierte Online-Optimierung**

Model-based on-line optimization

Optimisation en direct basée sur un modèle

(84) Benannte Vertragsstaaten:
**AT DE FR GB IT SE**

(30) Priorität: **09.02.2000 AT 902000 U**

(43) Veröffentlichungstag der Anmeldung:
**31.10.2001 Patentblatt 2001/44**

(73) Patentinhaber: **AVL List GmbH**
**8020 Graz (AT)**

(72) Erfinder:
- **Pflügl, Horst, Dipl.-Ing.**
  **8054 Seiersberg (AT)**
- **Riel, Andreas, Dipl.-Ing.**
  **8047 Graz (AT)**
- **Gschweitl, Kurt, Dr.**
  **8063 Eggersdorf (AT)**

(74) Vertreter: **Laminger, Norbert et al**
**Patentanwälte**
**Klein, Pinter & Laminger OEG**
**Prinz-Eugen-Strasse 70**
**1040 Wien (AT)**

(56) Entgegenhaltungen:
**US-A- 5 682 309**

- **O.JONSSON ET AL: "A NOTE ON STEP-SIZE RESTRICTIONS IN APPROXIMATION PROCEDURES FOR STRUCTURAL OPTIMIZATION" COMPUTERS AND STRUCTURES, Bd. 37, Nr. 3, 1990, Seiten 259-263, XP000997393 uk**
- **H.YUGUO ET AL : "A NEW ALGORITHM FOR REACTIVE POWER OPTIMIZATION BASED ON PRIMAL-DUAL INTERIOR POINT METHOD" PROCEEDINGS OF THE INTERNATIONAL CONFERENCE ON ELECTRICAL ENGINEERING, Bd. 2, 12. August 1996 (1996-08-12), Seiten 1009-1013, XP000997416 CHINA**
- **R.SALGADO ET AL: "OPTIMAL POWER FLOW SOLUTIONS USING THE GRADIENT PROJECTION METHOD" IEE PROCEEDINGS (GENERATION,TRANSMISSION AND DISTRIBUTION , Bd. 137, Nr. 6, November 1990 (1990-11), Seiten 424-428, XP000997573 UK**

**Beschreibung**

Die Erfindung betrifft ein Verfahren zur modellbasierten automatischen Optimierung einer Ausgangsgröße eines von mehreren Eingangsgrößen abhängigen Systems, beispielsweise einer Brennkraftmaschine, unter Einhaltung von Nebenbedingungen, wobei ein theoretischer Wert für die Ausgangsgröße und die Nebenbedingungen anhand je einer Modellfunktion mit den Eingangsgrößen als Variablen bestimmt und in aufeinanderfolgenden Einzelschritten jeweils eine der Eingangsgrößen innerhalb eines Variationsraumes mit einer der Anzahl der Eingangsgrößen entsprechenden Dimension verändert wird, wobei auch den jeweiligen Eingangsgrößen entsprechende Werte für Ausgangsgröße und Nebenbedingungen direkt am System ermittelt und zur Korrektur der Modellfunktionen herangezogen werden, bis die Modellfunktion ihren die Nebenbedingungen erfüllenden Optimalwert für die Ausgangsgröße erreicht hat.

Bekannte Verfahren zur Optimierung von nichtlinearen Systemen, bei welchen eine zu optimierende Größe von mehreren Eingangsgrößen abhängig ist, sind für komplexe Zusammenhänge sehr schwierig und aufwendig. Insbesondere betrifft dies Online-Optimierungsverfahren, bei welchen die entsprechenden Berechnungen und Messungen äußerst rasch erfolgen müssen, um die Änderungen am System und den allfälligen zugrundeliegenden Modellen zu erfassen, sowie die Anzahl der notwendigen Messungen gering gehalten werden soll, um Kosten zu sparen. Insbesondere ist dies der Fall für etwa eine Funktion, welche von beliebig vielen Eingangsvariablen abhängt, und die durch Veränderung dieser Variablen minimiert werden soll, während gleichzeitig beliebig viele andere Funktionen, welche von den gleichen Variablen abhängen, einen bestimmten Grenzwert nicht über bzw. unterschreiten sollen (Optimierung unter Einhaltung von Nebenbedingungen, Extremwertaufgaben unter Nebenbedingungen, Methode von Lagrange, engl: Constrained Optimisation). Ein Beispiel für eine spezielle Anwendung, ist in der Literatur unter "Model Assisted Pattern Search" zu finden.

So sind Verfahren bekannt, bei welchen der gesamte Variationsraum rasterförmig abgefahren und vermessen wird. Mit Hilfe der sogenannten "Folgevariation" wurde in der Nähe des bis dahin mit Hilfe der Modellrechnung und Optimierung gefundenen Optimums eine feinere Rastervermessung gestartet. Anschließend an diese Folgevariation wurde ein Optimum aufgrund aller bisherigen Messungen gerechnet und an dieser Stelle noch einmal eine Einzelmessung durchgeführt. Weiters sind auch Gradientensuchverfahren bekannt, bei welchen versucht wird, mit Hilfe der unmittelbar vorangegangen Messungen die Abstiegsrichtung mit dem steilsten Gradienten zu finden. Die Verstellung wird dann in die gefundene Richtung, deren Schrittweite üblicherweise von der Steilheit des Gradienten abhängt, durchgeführt. Bei stark rauschenden Messwerten, welche besonders bei kleinen Schrittweiten vorkommen, die am Beginn verwendet werden, kann die Abstiegsrichtung ebenfalls beliebig variieren. Das Verfahren führt daher im allgemeinen nur bei sehr stabilen Messwerten reproduzierbar auf das richtige Ergebnis. Außerdem ist die Anzahl der Messungen (welche sehr teuer sind) bei variabler Schrittweite relativ hoch.

Es war daher die Aufgabe der vorliegenden Erfindung ein Optimierungsverfahren der eingangs genannten Art derart zu verbessern, dass es schneller und mit geringerem Aufwand zu einem gesicherten Optimalwert für das System führt.

Diese Aufgabe wird erfindungsgemäß dadurch gelöst, dass die Veränderung der Eingangsgrößen für die Berechnung und Ermittlung am System in einer ersten Stufe in einer beliebig vorgegebenen Reihenfolge erfolgt, wobei für jede Eingangsgröße eine individuelle, vorgegebene Schrittgröße nicht überschritten wird und jene Richtung ausfindig gemacht wird, in welche die Modellfunktion voraussichtlich ihren Optimalwert annimmt, und nach Abarbeitung der vorgegebenen Reihenfolge diejenige Kombination von Eingangsgrößen als Startpunkt für die zweite Stufe herangezogen wird, die dem Optimalwert am nächsten liegt wobei die Veränderung der Eingangsgrößen für die Berechnung und Ermittlung am System in der zweiten Stufe bei jedem Schritt um eine zweite vorbestimmte Größe durchgeführt wird, die kleiner ist als jene der ersten Stufe. Die Modellfunktionen beinhalten den Einfluss aller Eingangsvariablen. Es gibt daher sowohl für die die Funktion, welche optimiert werden soll, als auch für die Nebenbedingungen jeweils nur ein Modell, welches alle Einflussgrößen gleichzeitig berücksichtigt. Am Anfang der Optimierung wird ein bestimmter, auch etwas größerer Bereich nach einem bestimmten vordefinierten Muster "abgetastet". Aufgrund der am System ermittelten Werte - und der damit statistisch besseren Modellbildung - kann dann in der nachfolgenden zweiten Stufe mit einer sehr geringen Anzahl von weiteren Schritten der Optimalwert für die betrachtete Ausgangsgröße gefunden werden. Dabei werden nach der selben Vorgangsweise wie in der ersten Stufe die Auswertungen am System direkt um das Optimum durchgeführt, bis der Wert der Modellrechnung mit den tatsächlichen Werten mit wählbarer Genauigkeit übereinstimmt. Die beliebige Kombination von zusammen oder einzeln veränderten Eingangsgrößen erlaubt nicht nur "orthogonale" Abtastung des Raumes der Eingangsgrößen, sondern erfaßt auch dazwischenliegende Richtungen.

Gemäß einer besonders einfachen Variante ist vorgesehen, dass die Veränderung der Eingangsgrößen für die Berechnung und Messung am System in einer ersten Stufe bei jedem Schritt um eine vorbestimmte Größe durchgeführt wird, wobei jeweils nur eine Eingangsgröße verändert und die Messung und der Abgleich mit der Modellfunktion für jede veränderte Eingangsgröße gesondert erfolgt und das System nach Veränderung aller Eingangsgrößen für den nächsten Schritt auf die Kombination von Eingangsgrößen gesetzt wird, die dem Optimalwert für die Ausgangsgröße am nächsten liegen.

Gemäß einer vorteilhaften Weiterbildung dieser Verfahrensvariante ist vorgesehen, dass die Eingangsgrößen so lange um die erste vorbestimmte Größe verändert werden, bis unter Einhaltung der Nebenbedingungen keine weitere Verbesserung des am System gemessenen und des aufgrund der Modellfunktion errechneten Ausgangswertes in Richtung auf den Optimalwert hin erfolgt. Damit ist eine rasche Annäherung an die ungefähre Eingangsgrößen-Kombination für den Optimalwert der Ausgangsgröße möglich.

Vorteilhafterweise wird auch dabei jeweils nur eine Eingangsgröße verändert, falls einer der umliegenden Punkte am Grobraster nicht einstellbar ist, oder werden alle Eingangsgrößen zugleich verändert, falls dies nicht der Fall ist, und wird die Werteermittlung am System durchgeführt und erfolgt der Abgleich mit der Modellfunktion für jede veränderte Eingangsgröße gesondert und wird das System nach Veränderung aller Eingangsgrößen für den nächsten Schritt auf die Kombination von Eingangsgrößen gesetzt , die dem Optimalwert für die Ausgangsgröße am nächsten liegen. Wenn dabei - wie auch in der ersten Stufe - die umliegenden Punkte des Optimums auf diesem Raster auch gemessen werden, kann damit die Gefahr der Ermittlung eines lediglich lokalen Optimums vermieden werden.

Gemäß einem weiteren Merkmal der Erfindung kann aber auch alternativ dazu vorgesehen sein, dass nacheinander alle möglichen Kombinationen von Eingangsgrößen in einem bestimmten Bereich um den Ausgangspunkt der zweiten Stufe eingestellt und so der gesamte Variablenraum im gewählten Bereich abgetastet wird. Dieses Merkmal gewährleistet ebenfalls eine rasche Ermittlung des tatsächlichen Optimalwertes mit wählbarer Genauigkeit. Und darüber hinaus ist durch Abtastung des gesamten Variablenraumes sichergestellt, dass das globale Optimum ermittelt wurde.

Damit die Optimierung auch mit größter Sicherheit den tatsächlichen Optimalwert ergibt, werden gemäß einem weiteren Erfindungsmerkmal die Schritte der zweiten Stufe solange wiederholt, bis das System schließlich auf die Variablen eingestellt ist, die unter Einhaltung der Nebenbedingungen den Optimalwert für die Ausgangsgröße im gewählten Bereich liefern.

Vorteilhafterweise ist dabei vorgesehen, dass die Veränderung der Eingangsgrößen für die zweite Stufe in mehreren Schritten um insgesamt maximal den Betrag erfolgt, der vorbestimmten Größe der ersten Stufe entspricht. Dieses Merkmal vermeidet redundante Messungen und Berechnungen für Eingangswerte-Kombinationen, die bereits bei der raschen Annäherung berücksichtigt worden sind.

Wenn vorgesehen ist, dass die Werte aus dem System mit Modellfunktionen maximal 2. Ordnung abgeglichen werden, ist eine einfache, wenig aufwendige und damit sehr schnelle Berechnung der Modellfunktionen möglich. Aufgrund des in der Praxis meist sehr beschränkten Variationsraumes treten bei beliebigen Funktionen 2. Ordnung kaum mehrere Lösungen auf, doch könnte durch die mögliche Einschränkung auf ausschließlich konvexe quadratische Modelle sichergestellt werden, dass es nur eine Lösung der Optimierungsaufgabe gibt. Selbstverständlich können aber prinzipiell alle Arten von Funktionen, mathematischen und sogar physikalischen Modellen berücksichtigt werden, etwa Spline-Funktionen oder neuronale Netze. Es gibt auch z.B. die Möglichkeit, die Ordnung eines Polynomial-Modelles automatisch mit Hilfe von statistischen Verfahren bestimmen zu lassen.

Einen einfacheren Start der Optimierung ergibt das weitere Erfindungsmerkmal, dass die Werte aus dem System im ersten Schritt der ersten Stufe mit einer Modellfunktion 1. Ordnung abgeglichen werden. Dabei wird vorteilhafterweise die erste Variation jeder Eingangsgröße in Richtung auf die Mitte des Variationsraumes hin vorgenommen. Mittels "intelligenter Setzung" der Messpunkte, d.h. durch statistische Verfahren ermittelte Verteilung der Messpunkte, können bereits die ersten Messpunkte derart gesetzt werden, dass die nachfolgende Modellrechnung noch exakter wird bzw. dass man mit möglichst wenigen Messungen bereits ein gutes Modell für das reale System erhält.

Unzulässige Zustände des Systems und Zerstörungen darin im Fall von realen Systemen können dadurch verhindert werden, dass bei jeder Veränderung einer Eingangsgrö-ße das System überwacht, die Veränderung bei Überschreiten vorgegebener Grenzwerte für vorbestimmte Nebenbedingungen gestoppt und rückgängig gemacht und die aufgrund dieses Eingriffs nicht realisierte Eingangsgrößenkombination in einer Datenbank gespeichert und für die weitere Optimierung gesperrt werden. Aufgrund von harten Limits beispielsweise bei einem Prüfstandssystem ist nicht von vornherein sichergestellt, ob eine beliebige Kombination der Eingangsgrößen den Motor (od. Teile davon) zerstört oder nicht. Die Verstellung der Variationsparameter wird daher mit Hilfe von verschiedenen Regeln so gesteuert, dass eine Zerstörung des Motors zuverlässig vermieden wird. Da in jeder Stufe des Optimierungsverfahrens ja immer nur ein einziger Variationsparameter in einem neuen Schritt verstellt wird, können Limitverletzungen eindeutig deren Ursache zugeordnet werden.

In der nachfolgenden Beschreibung soll die Erfindung mit Hilfe eines Ausführungsbeispiels unter Bezugnahme auf die beigefügten Zeichnungen näher erläutert werden.

Dabei zeigt die Fig. 1 den Verlauf einer zu optimierenden Funktion eines technischen Systems, wie etwa einer Brennkraftmaschine, in Abhängigkeit von zwei Eingangsgrößen, Fig. 2 zeigt den Suchpfad für die Optimierung des Systems und Fig. 3 stellt die Modellfunktion, die zugehörigen Messwerte und den Suchpfad des Optimierers dar.

Ein bevorzugtes Beispiel für die Anwendung des beschriebenen Optimierungsverfahrens, der dabei vorgesehenen Vorgangsweise und Algorithmen, welche vorzugsweise für die Online-Optimierung Anwendung finden, ist etwa eine Verbrennungskraft-Maschine, die sich auf einem Motorenprüfstand befindet. Das beschriebene Verfahren ist für die stationäre Optimierung geeignet, d.h. der Motor befindet sich während der Optimierung in einem stationären Betriebspunkt (Drehzahl und Drehmoment werden konstant gehalten) währenddessen beliebig viele andere Parameter an der Motorelektronik verstellt und optimiert werden (z.B. Abgasrückführrate, Zündwinkel, ...). Die Kommunikation des Optimierers mit dem Prüfstand erfolgt über eine flexible Schnittstelle, welche das Messen und Stellen von Prüfstandswerten sehr einfach macht. Neben der Optimierung realer Systeme kann das erfindungsgemäße Verfahren aber auch zur Optimierung von Simulations-Systemen herangezogen werden, in welchen beispielsweise eine Brennkraftmaschine durch ein Softwareprogramm simuliert wird, wobei in diesem Fall mit dem nachfolgend beschriebenen Verfahren die damit simulierten Betriebsbedingungen und —effekte optimiert werden können. Anstelle einer Messung an einem realen System tritt hier die Ermittlung von Werten aus dem Simulations-System.

Der Algorithmus, mit dem die Eingangsgrößen, welche gleichzeitig die Variationsparameter der Modellfunktion für das zu optimierende System darstellen, verändert werden, hebt sich durch ganz besondere Eigenschaften von der großen Anzahl an bereits bekannten Optimierungs-Algorithmen ab.

Die Messwerte —oder simulierten Werte—, welche für die zu optimierende Funktion aus dem Prozess geliefert werden, sind üblicherweise mit stochastischen und systematischen Fehlern behaftet. Die Ansammlung dieser Fehler verursacht in der Zielfunktion Störungen, die hochfrequent sind und niedrige Amplituden aufweisen und somit die idealisierte Zielfunktion, welche optimiert werden soll, so verändert, das eine Optimierung sehr schwierig wird. Würde man für die solchermaßen gestörte Zielfunktion mit Hilfe von partiellen Ableitungen den Gradienten bestimmen, so würde man Gefahr laufen, aufgrund des hohen Einflusses der Störungen in die falsche Richtung gelenkt zu werden, und damit das globale Optimum zu verfehlen. Es besteht die Gefahr, dass man in lokalen Minima hängenbleibt. Die Verwendung einer Gradientensuchmethode (engl. Line Search, Gradient Search) liefert bei der beschriebenen Aufgabenstellung falsche und nicht reproduzierbare Ergebnisse, sobald - und das ist praktisch immer der Fall - die Messungen mit Störungen behaftet sind. Andererseits wäre die Gradientenbildung bei störungsfreien Messwerten am besten dazu geeignet, den optimalen Suchpfad in Richtung des Optimums der Zielfunktion zu bestimmen. Bei dem hier angewandten Modelbasierten Optimierungsverfahren, welches eine modifizierte Ausformung des MAPS Algorithmus (engl. Model Assisted Pattern Search) darstellt, wird mit Hilfe einer Modellfunktion (Polynomiale Modelle 2.ter Ordnung) der tatsächliche Prozess parallel simuliert und optimiert. Diese Modelle sind in der Lage, die auftretenden Störungen auszugleichen, und eine Optimierung kann mit Hilfe dieser sogenannten "Ersatzfunktion" durchgeführt werden.

Bei Raster-Such-Methoden darf jede neue Variation der Eingangsgrößen nur auf einem vordefinierten Raster durchgeführt werden. Damit wird die Konvergenz des Verfahrens sichergestellt. Unter besonderen Umständen kann die Größe des Rasters auch neu definiert werden. Nicht jeder beliebige Nachbarpunkt auf diesem Raster darf nun als nächstes eingestellt werden, sondern es darf immer nur eine Eingangsgröße zur selben Zeit in positive oder negative Richtung verstellt werden. Diese Vorgangsweise wird auch als "Koordinatensuche" (engl. "Coordinate Search") bezeichnet.

Weiters sind Optimierungsverfahren unter Verwendung einer Ersatzfunktion bekannt. Da jede Messung am eigentlichen Prozess zusätzliche, hohe Kosten verursacht (Einstellen der neuen Variationen am laufenden Motor, Stabilisierung, Messen und Hochladen der Messwerte) wird anstelle der Original-Zielfunktion eine Ersatzfunktion (ein Modell) verwendet, welche die Zielfunktion im interessierenden Bereich möglichst gut approximiert. Als Modell wird eine polynomiale Funktion zweiter Ordnung verwendet, welche mit Hilfe der Methode der kleinsten Fehlerquadrate gefunden werden kann. Der Vorteil besteht nun darin, dass man das Minimum dieser Ersatzfunktion wesentlich schneller und ohne zusätzliche Kosten behaftet ermitteln kann. Da mit dieser Ersatzfunktion auch Informationen über die Zielfunktion zur Verfügung stehen, welche außerhalb des bereits gemessenen Bereiches liegen (Extrapolation), spricht man auch von einem DACE (Design and approximation of computer experiments) Konzept. Im folgenden wird dieses Konzept noch etwas näher erläutert.

Das Konzept des MAPS (Model Assisted Pattern Search) findet besonders dann seine Anwendung, wenn die Anzahl der Messungen am Prozess möglichst gering gehalten werden soll. Da hierbei die Zielfunktion über den gesamten Variationsraum approximiert wird, werden die neu akquirierten Messwerte aus dem Prozess unmittelbar dazu herangezogen, um die ursprüngliche Approximation zu verbessern. Die Suchstrategie von MAPS, welche zum Auffinden der nächsten Variationskombination führt, ist ein Teil des hier verwendeten Algorithmus. Die vorhandene Approximation der Zielfunktion wird verwendet, um einen weiteren eingeschränkten, interessierenden Bereich aus dem gesamten Variationsraum zu bestimmen. D.h. es wird jene Richtung ausfindig gemacht, in welche die Zielfunktion voraussichtlich kleinere Werte annimmt. Nach der nächsten Verstellung in diesem eingeschränkten Bereich werden neue Messwerte akquiriert und die Approximationsfunktion für die Zielfunktion neu gerechnet. Da durch die neuerliche Messung mehr Daten für die Approximation zur Verfügung stehen, steigt die Güte der Modelle (und damit die Genauigkeit des errechneten Optimums) mit jedem weiteren Messschritt an.

Die hier beschriebene, erfindungsgemäße Optimierung wird in einem orthogonalen Bereich ausgeführt, der durch die Festlegung von oberen und unteren Schranken für die einzelnen Variationsparameter bestimmt ist. Normalerweise ist es möglich, in jedem Punkt dieses Bereiches Messungen durchzuführen und damit Werte für die Zielfunktion zu bestimmen. Es kann aber auch vorkommen, das in bestimmten Bereichen Betriebszustände am Motor herrschen, die eine Zerstörung oder zumindest Gefährdung desselben verursachen könnten. Tritt eine Über- oder Unterschreitung von vordefinierten Grenzwerten auf, so spricht man von einer Grenzwertverletzung. Tritt eine Grenzwertverletzung auf, so ist die Messung in diesem Punkt nicht gültig. Weiters wird bei der weiteren Suche des Optimums die bereits einmal grenzwertverletzte Verstellkombination nicht wieder eingestellt.

Als Suchstrategien kommen folgende Strategien zur Anwendung:

Strategie A

Beim Start der Iteration muss der Algorithmus einige Anfangswerte durch Messung ermitteln. Da zu diesem Zeitpunkt noch keine Zielrichtung für die Iteration vorliegt, wird angenommen, dass in jede Koordinatenrichtung genau einmal verstellt werden soll. Dadurch wird es möglich, ein Regressionsmodell erster Ordnung der gesuchten Funktion zu berechnen. Zusätzlich weist das beschränkte Minimum dieses Modells dem Algorithmus die Abstiegsrichtung. Die Variationsprozedur muss berücksichtigen, dass bereits erfolgreich verifizierte Koordinatenkombinationen nicht wiederholt eingestellt werden.

Strategie B

Diese Strategie legt fest, wie die nächste Iteration anhand des Minimums der Ersatzfunktion ermittelt wird. Die allgemeine Regel für die Koordinatensuche lautet: Finde und verstelle jene Koordinate, die am schnellsten zum Minimum der Ersatzfunktion führt. Natürlich können Situationen auftreten, in denen es nicht möglich ist, in diese "steilste" Koordinatenrichtung zu verstellen. Das ist beispielsweise dann der Fall, wenn das Minimum außerhalb des zulässigen Variationsbereichs gefunden wird. Wenn der momentane Iterationspunkt bereits am Rande des zulässigen Bereichs liegt, würde die Anwendung dieser Regel den Suchpfad aus diesem Bereich zwingen. Die Suchstrategie muss diese Situation daher vermeiden. Da die Güte der Ersatzfunktion mit der Anzahl an verschiedenen Iterationspunkten vorgenommenen Messungen ansteigt, soll die Strategie Punkte bevorzugen, an denen noch nicht gemessen wurde. Man könnte auch argumentieren, dass Mehrfachmessungen durch die Reduktion stochastischer Messfehler ebenfalls zu einer Verbesserung der Ersatzfunktion führen würden. Allerdings besteht das Hauptziel jeder Iteration darin, an jenen Punkten Messungen durchzuführen, an denen ein maximaler Informationsgewinn für die Steigerung der Modellgüte zu erwarten ist. Aus diesem Grund priorisiert die Suchstrategie noch nicht gemessene Punkte gegenüber bereits gemessenen: Noch nicht gemessene Punkte sind gegenüber bereits gemessenen zu bevorzugen.

Ein weiteres Problem stellen unzulässige Punkte dar. Das sind solche Punkte, an denen während des Messvorgangs eine Grenzwertverletzung auftritt. Wie oben erwähnt, müssen diese Punkte aus der Menge der möglichen Variationen ausgeschlossen werden. Punkte, an denen Grenzwertverletzungen detektiert wurden, werden aus der Suche ausgeschlossen.

Bei der Minimierung einer Zielfunktion durch Koordinatensuche muss die Strategie immer einen Kandidaten für die nächste Variation liefern. Ansonsten würde die Suche unterbrochen, und der Algorithmus wäre in einem Zustand, in dem die Qualität der momentanen Lösung nicht bestimmt ist. Dadurch kann es auch vorkommen, dass vom Minimum der Ersatzfunktion fortvariiert wird, wenn der direkte Weg dorthin nicht zulässig ist.

Benachbarte Punkte werden nach Prioritäten sortiert, und aus ihnen der beste ausgewählt.

Die oben angeführten Regeln geben einen Überblick über die Suchstrategie, die im wesentlichen einen lokalen Ansatz verfolgt: Die Eigenschaften der dem aktuellen Variationspunkt am Variationsgitter unmittelbar benachbarten Punkte ergeben zusammen mit der Position des Minimums der Ersatzfunktion den nächsten Iterationspunkt.

Strategie C

Diese Strategie wird dazu verwendet, einen Iterationspunkt am feinen Gitter zu finden. Das Ziel dabei ist nach wie vor, sich möglichst schnell dem Minimum der Ersatzfunktion anzunähern. Allerdings wird bei diesem Vorgang keine Koordinatensuche mehr angewandt, sondern stattdessen gleichzeitig in mehrere Koordinatenrichtungen variiert. Dabei sind zwei Situationen zu unterscheiden: Bei einer Grenzwertverletzung in der Umgebung des aktuellen Punktes wird mit kleiner Schrittweite in Richtung des Minimums iteriert. Liegt in der Umgebung des aktuellen Punktes keine Grenzwertverletzung vor, wird direkt zum Minimum der Ersatzfunktion vorangeschritten.

Der erfindungsgemäß angewandte Optimierungsalgorithmus verwendet mathematische Modelle (lineare oder quadratische Polynomialmodelle) um die auftretenden Messstreuungen in der Zielfunktion des realen zu optimierenden Systems, etwa der am Prüfstand befindlichen Verbrennungskraftmaschine, auszugleichen. Der Einfachheit halber haben wir angenommen, dass die Zielfunktion und Restriktionen ein quadratisches Verhalten aufweisen. Natürlich werden die erhaltenen Resultate umso ungenauer (d.h. das errechnete Minimum wird vom tatsächlichen Minimum weiter abweichen), je mehr das tatsächliche Verhalten der Funktionen vom quadratischen Verhalten abweicht. In diesem Fall würde die Modellierung mit quadratischen Funktionen ungenaue Optima liefern. Die Gefahr, dass diese Abweichung groß ist, ist umso höher, je größer der vorgegebene Variationsraum ist.

Man könnte dieser Ungenauigkeit zwar entgegenwirken indem man die Ordnung der Modelle erhöht, andererseits würde eine Erhöhung der Modellordnung dazu führen, dass man wesentlich mehr Messwerte benötigen würde, um einigermaßen gesicherte Resultate zu erhalten, was wiederum im Widerspruch zur Anforderung steht, mit möglichst wenig Messungen zum Optimum zu gelangen.

Ein Verfahren zur Optimierung wie oben beschrieben kann in manchen Fällen dadurch verbessert werden, dass die zu Beginn ein etwas größerer Bereich im Variationsraum der Eingangsgrößen in einem vordefinierten Muster, das aber prinzipiell frei gewählt werden kann, vorsichtig "abgetastet" wird. Die mit dieser Methode ermittelten Erkenntnisse führen danach aufgrund der statistisch besseren Modellbildung dazu, dass in der nachfolgenden zweiten Stufe weniger Messungen bzw. Ermittlungen von Systemwerten benötigt werden, um das Optimum für die Modellfunktion zu finden. Die Muster bestehen typischerweise aus einer Anzahl von Punkten im Variationsraum, welche Punkte in einer vorgegebenen Reihenfolge angefahren werden, wobei zum Erreichen jedes Punktes eine Anzahl von Schritten erforderlich ist, welche von einer nicht zu überschreitenden Schrittweite für die Eingangsgrößen bestimmt wird. Diese Schrittweite kann für jede Größe individuell vorgegeben sein, wobei also für die verschiedenen Eingangsgrößen auch verschiedene maximale Schrittweiten vorgegeben sein können.

Auch ist nicht zwingend notwendig, dass pro Schritt immer nur eine Eingangsgröße verändert wird, d.h. die Schritte orthogonal gesetzt werden, sonder es können auch Schritte in einem beliebigen Winkel zwischen den Achsen erfolgen. Dabei wird aber - entsprechend dem Prinzip, dass die maximale Schrittweite für die einzelnen Eingangsgrößen nicht überschritten werden darf - die absolute Schrittweite durch die Schrittweite derjenigen der veränderten Eingangsgrößen bestimmt, welche von diesen die kleinste Schrittweite vorgegeben hat.

Die obigen Prinzipien sollen abschließend anhand eines Anwendungsbeispiels deutlich gemacht werden.

Gegeben sei eine Funktion f(x), welche zu minimieren ist: Minimiere

$$f(x),$$

sodass gilt

$$\mathbf{x} \in B \equiv \{x \mid a \le x \le b\},$$

wobei

$$f : R^n \to R \cup \{\infty\}, a, b \in R^n.$$

Die hier verwendete Funktion ist die in der Optimierungstechnik hinlänglich bekannte "Bananenfunktion" von Rosenbrock. Der Funktionswert von f errechnet sich aus der Formel:

$$f(x) = 100 \cdot \left(x_2 - x_1^2\right)^2 + \left(1 - x_1\right)^2.$$

Außerdem wurde zu dieser Funktion noch eine gleichverteilte stochastische Störfunktion mit der maximalen Amplitude von $\pm 2$ addiert.

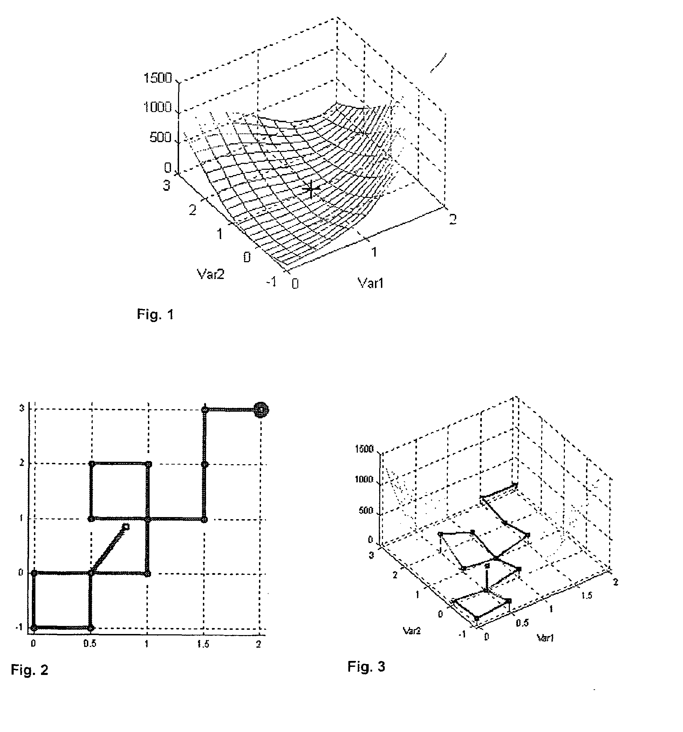

Fig. 1 zeigt den Verlauf der Funktion in Abhängigkeit der Variationsparameter im Intervall von $\{x_1 \mid 0 \le x_1 \le 2\}$ und $\{x_2 \mid -1 \le x_2 \le 3\}$. Die Funktion zeichnet sich durch einen Bereich mit besonders flachem Gradienten aus, in dem das Optimum am Punkt [1, 1] liegt. Das angegebene Intervall der Variationsparameter wurde so gewählt, dass sich die Funktion noch mit ausreichender Genauigkeit durch ein Modell 2.Ordnung nachbilden läßt. Die entsprechende Modellfunktion, die zugehörigen Messwerte und den Suchpfad des Optimierers zeigt die Fig. 3.

Als Startwert wurde der Punkt [2, 3] gewählt, das Grobraster ist durch jeweils 5 Variationen in jede Richtung bestimmt. Damit ergibt sich in $\mathbf{x}_1$-Richtung eine maximale Schrittweite von 0.5 und in $\mathbf{x}_2$-Richtung eine maximale Schrittweite von **1**. Die maximale Schrittweite ergibt sich aus dem Grobraster. Durch Vorgabe der Min- und Max- Werte sowie die Anzahl der Unterteilungen (od. dadurch errechneter Schrittweite) für jeden Variationsparameter ergibt sich das Grobraster. Das bedeutet für die erste Stufe, es werden die Variationen auf einen Punkt gesetzt, der unmittelbar zum derzeitigen "Standpunkt" benachbart ist und gleichzeitig der Nächstliegende zum vermeintlichen Optimum ist.

Der Ausdruck Feinraster ist an und für sich verwirrend, da in dieser Phase die Variationen nicht analog zu vorher direkt auf Feinrasterpunkte gesetzt werden, sondern eben direkt auf das Optimum, soferne das Optimum nicht durch weitere Messungen und veränderte Modelle wieder auf einen Punkt wandert, der weiter vom aktuellen Standpunkt entfernt ist. In letzterem Fall würde man wieder mit der Grobrastermethode zu diesem neuen Optimum hinfahren. Das Feinraster findet nur dann Verwendung, wenn ein Grobrasterpunkt mit Grenzwertverletzung unmittelbar in der Nähe des Optimums liegt. Dann wird mit dieser Feinrasterschrittweite in Richtung des Optimums und damit in Richtung eines bekannten grenzwertverletzten Punktes vorgegangen.

Das Optimierungsverfahren terminierte nach 16 Iterationen bei einem Optimalwert von 3.8 mit der Variationskombination von [0.81, 0.85] (gegenüber tatsächlich 0 bei [1, 1]). Die Fig. 2 zeigt den Suchpfad, beginnend bei [2, 3] bis hin zum gerechneten Optimum in Abhängigkeit der beiden Variationsparameter. Die geringfügige Abweichung gegenüber dem tatsächlichen Optimum liegt einerseits in der Ungenauigkeit des Modells, welches die vorgegebene Funktion nicht ideal abbilden kann, andererseits am Einfluss der aufgeschalteten Störfunktion.

Es gibt öfters die Möglichkeit mit gleich vielen Schritten von einem Mess- und Modellpunkt A zum nächsten Punkt B zu gelangen. In diesem Fall wird derjenige Weg bevorzugt, der noch nicht vermessen wurde, da man in jedem Fall nach jeder Variation eine Messung durchführt. Wenn diese Messung daher auf einem Punkt gemacht wird, an dem zuvor noch keine Messung gemacht wurde, erhöht sich damit die Sicherheit, dass das Optimum tatsächlich global ist.

## Patentansprüche

1. Verfahren zur automatischen Optimierung einer Ausgangsgröße eines von mehreren Eingangsgrößen abhängigen Systems, beispielsweise einer Brennkraftmaschine, unter Einhaltung von Nebenbedingungen, wobei ein theoretischer Wert für die Ausgangsgröße und die Nebenbedingungen anhand je einer Modellfunktion mit den Eingangsgrößen als Variablen bestimmt und in aufeinanderfolgenden Einzelschritten jeweils eine der Eingangsgrößen innerhalb eines Variationsraumes mit einer der Anzahl der Eingangsgrößen entsprechenden Dimension verändert wird, wobei auch den jeweiligen Eingangsgrößen entsprechende Werte für Ausgangsgröße und Nebenbedingungen direkt am System ermittelt und zur Korrektur der Modellfunktionen herangezogen werden, bis die Modellfunktion ihren die Nebenbedingungen erfüllenden Optimalwert für die Ausgangsgröße erreicht hat, **dadurch gekennzeichnet, dass** die Veränderung der Eingangsgrößen für die Berechnung und Ermittlung am System in einer ersten Stufe in einer beliebig vorgegebenen Reihenfolge erfolgt, wobei für jede Eingangsgröße eine individuelle, vorgegebene Schrittgröße nicht überschritten wird und jene Richtung ausfindig gemacht wird, in welche die Modellfunktion voraussichtlich ihren Optimalwert annimmt, und nach Abarbeitung der vorgegebenen Reihenfolge diejenige Kombination von Eingangsgrößen als Startpunkt für die zweite Stufe herangezogen wird, die dem Optimalwert am nächsten liegt, wobei die Veränderung der Eingangsgrößen für die Berechnung und Ermittlung am System in der zweiten Stufe bei jedem Schritt um eine zweite vorbestimmte Größe durchgeführt wird, die kleiner ist als jene der ersten Stufe.

2. Verfahren nach Anspruch 1, **dadurch gekennzeichnet, daß** die Veränderung der Eingangsgrößen für die Berechnung und Ermittlung am System in der ersten Stufe bei jedem Schritt um eine vorbestimmte Größe durchgeführt wird, wobei jeweils nur eine Eingangsgröße verändert und die Messung bzw. Werteermittlung am System und der Abgleich mit der Modellfunktion für jede veränderte Eingangsgröße gesondert erfolgt und das System nach Veränderung aller Eingangsgrößen für den nächsten Schritt auf die Kombination von Eingangsgrößen gesetzt wird, die dem Optimalwert für die Ausgangsgröße am nächsten liegen.

3. Verfahren nach Anspruch 2, **dadurch gekennzeichnet, dass** die Eingangsgrößen so lange um die erste vorbestimmte Größe verändert werden, bis unter Einhaltung der Nebenbedingungen keine weitere Verbesserung des am System gemessenen und des aufgrund der Modellfunktion errechneten Ausgangswertes in Richtung auf den Optimalwert hin erfolgt.

4. Verfahren nach einem der Ansprüche 1, 2 oder 3, **dadurch gekennzeichnet, dass** jeweils nur eine Eingangsgröße verändert wird, falls einer der umliegenden Punkte am Grobraster nicht einstellbar ist, oder alle Eingangsgrößen zugleich verändert werden, falls dies nicht der Fall ist, und die Werteermittlung durchgeführt und der Abgleich mit der Modellfunktion für jede veränderte Eingangsgröße gesondert erfolgt und das System nach Veränderung aller Eingangsgrößen für den nächsten Schritt auf die Kombination von Eingangsgrößen gesetzt wird, die dem Optimalwert für die Ausgangsgröße am nächsten liegen.

5. Verfahren nach einem der Ansprüche 1, 2 oder 3, **dadurch gekennzeichnet, dass** nacheinander alle möglichen Kombinationen von Eingangsgrößen in einem bestimmten Bereich um den Ausgangspunkt der zweiten Stufe eingestellt und so der gesamte Variablenraum im gewählten Bereich abgetastet wird.

6. Verfahren nach einem der Ansprüche 3 bis 5, **dadurch gekennzeichnet, dass** die Schritte der zweiten Stufe solange wiederholt werden, bis das System schließlich auf die Variablen eingestellt ist, die unter Einhaltung der Nebenbedingungen den Optimalwert für die Ausgangsgröße im gewählten Bereich liefern.

7. Verfahren nach einem der Ansprüche 3 bis 6, **dadurch gekennzeichnet, dass** die Veränderung der Eingangsgrößen für die zweite Stufe in mehreren Schritten um insgesamt maximal den Betrag erfolgt, der der vorbestimmten Größe der ersten Stufe entspricht.

8. Verfahren nach einem der vorhergehenden Ansprüche, **dadurch gekennzeichnet, dass** die Werte aus dem System mit Modellfunktionen maximal 2. Ordnung abgeglichen werden.

9. Verfahren nach Anspruch 8, **dadurch gekennzeichnet, dass** die Werte aus dem System im ersten Schritt der ersten Stufe mit einer Modellfunktion 1. Ordnung abgeglichen werden.

10. Verfahren nach einem der vorhergehenden Ansprüche, **dadurch gekennzeichnet, dass** bei jeder Veränderung einer Eingangsgröße das System überwacht, die Veränderung bei Überschreiten vorgegebener Grenzwerte für vorbestimmte Nebenbedingungen gestoppt und rückgängig gemacht und die aufgrund dieses Eingriffs nicht realisierte Eingangsgrößenkombination in einer Datenbank gespeichert und für die weitere Optimierung gesperrt werden.

**Claims**

1. Method for the automatic optimisation of an output parameter of a system dependent upon several input parameters, for example, a combustion engine, while observing side constraints, wherein a theoretical value for the output parameter and the side constraints is determined in each case on the basis of a model function with the input parameters as variables, and in each case, one of the input parameters is varied in successive, individual steps within a variational space with a dimension corresponding to the number of input parameters, wherein values for output parameters and side constraints corresponding to the respective input parameters are also determined directly in the system and used for the correction of the model functions until the model function has reached its optimum value fulfilling the side constraints for the output parameter,
**characterised in that**
the variation of the input parameters for the calculation and determination within the system takes place in a first stage in a randomly specified sequence, wherein for each input parameter, an individual, specified step size is not exceeded, and the direction is found, in which the model function can be expected to adopt its optimum value, and, after working through the specified sequence, the combination of input parameters, which is disposed closest to the optimum value, is used as the starting point for the second stage, wherein the variation of the input parameters for the calculation and determination within the system is implemented at each step in the second stage by a second specified value, which is smaller than that of the first stage.

2. Method according to claim 1,
**characterised in that**
the variation of the input parameters for the calculation and determination within the system is implemented at each step in the first stage by a specified value, wherein in each case only one input parameter is varied, and the measurement or respectively value determination within the system and the comparison with the model function takes place separately for each varied input parameter, and, after the variation of all input parameters, the system is set for the next step to the combination of input parameters, which are disposed closest to the optimum value for the output parameter.

3. Method according to claim 2,
**characterised in that**
the input parameters are varied by the first specified value until, while still observing the side constraints, no further improvement of the output parameter measured within the system and calculated on the basis of the model function takes place in the direction towards the optimum value.

4. Method according to any one of claims 1, 2 or 3,
**characterised in that**

only one input parameter is varied, if one of the surrounding points in the coarse raster cannot be set, or respectively, all input parameters are varied at the same time, if this is not the case, and the value determination is implemented and the comparison with the model function takes place separately for each varied input parameter, and, after the variation of all input parameters, the system is set for the next step to the combination of input parameters, which are disposed closest to the optimum value for the output parameter.

5. Method according to any one of claims 1, 2 or 3,
**characterised in that**
all possible combinations of input parameters are adjusted successively within a given range around the output point of the second stage, and the entire variable space within the selected range is sampled in this manner.

6. Method according to any one of claims 3 to 5,
**characterised in that**
the steps of the second stage are repeated until the system is ultimately adjusted to the variables, which supply the optimum value for the output parameter within the selected range while still observing the side constraints.

7. Method according to any one of claims 3 to 6,
**characterised in that**
the variation of the input parameters for the second stage by an overall maximum amounting to the specified value of the first stage takes place in several steps.

8. Method according to any one of the preceding claims,
**characterised in that**
the values from the system are compared with model functions of maximally second order.

9. Method according to claim 8,
**characterised in that**
the values from the system in the first step of the first stage are compared with a first-order model function.

10. Method according to any one of the preceding claims,
**characterised in that**,
at every variation of an input parameter, the system is monitored, and the variation is stopped and reversed if specified limit values for specified side constraints are exceeded, and the combination of input parameters not realised as a result of this intervention is stored in a databank and blocked for the further optimisation.

**Revendications**

1. Procédé d'optimisation automatique d'une grandeur de sortie d'un système dépendant de plusieurs grandeurs d'entrée, par exemple d'un moteur à combustion interne, sous respect de conditions secondaires, une valeur théorique pour la grandeur de sortie et les conditions secondaires étant déterminée chaque fois à l'aide d'une fonction de modélisation avec les grandeurs d'entrée en tant que variables et chaque fois l'une des grandeurs d'entrée étant variée dans des étapes individuelles successives au sein d'une marge de variation avec une dimension correspondant au nombre des grandeurs d'entrée, des valeurs correspondant aux grandeurs d'entrée concernées pour des grandeurs de sortie et des conditions secondaires étant également déterminées directement sur le système et impliquées pour la correction des fonctions de modélisation, jusqu'à ce que la fonction de modélisation ait atteint sa valeur optimale, satisfaisant aux conditions secondaires pour la grandeur de sortie, **caractérisé en ce que** la variation des grandeurs d'entrée pour le calcul et la détermination sur le système est assurée dans un premier stade, selon une séquence quelconque prédéfinie, une grandeur individuelle d'étape prédéfinie n'étant pas dépassée pour chaque grandeur d'entrée et la direction dans laquelle la fonction de modélisation adopte de façon prévisionnelle sa valeur optimale étant recherchée, et après exécution de la séquence prédéfinie, l'association de grandeurs d'entrée qui est la plus proche de la valeur optimale étant impliquée en tant que point de départ pour le deuxième stade, la variation des grandeurs d'entrée pour le calcul et la détermination sur le système étant réalisée au deuxième stade, à chaque étape de la valeur d'une deuxième grandeur prédéfinie qui est inférieure à celle du premier stade.

2. Procédé selon la revendication 1, **caractérisé en ce que** la variation des grandeurs d'entrée pour le calcul et la détermination sur le système au premier stade est réalisée à chaque étape de la valeur d'une grandeur prédéfinie, seule une grandeur d'entrée étant variée à chaque fois et la mesure ou la détermination des valeurs sur le système et l'ajustement sur la fonction de modélisation étant assurés séparément pour chaque grandeur d'entrée variée et après variation de toutes les grandeurs d'entrée, le système étant placé pour l'étape suivante sur l'association des grandeurs d'entrées qui sont le plus proches de la valeur optimale pour la grandeur de sortie.

3. Procédé selon la revendication 2, **caractérisé en ce qu'**on varie les grandeurs d'entrée de la valeur de la première grandeur prédéfinie, jusqu'à ce que sous respect des conditions secondaires, plus aucune amélioration plus poussée de la valeur de sortie mesurée sur le système et de celle calculée sur la base de la fonction de modélisation ne soit assurée en direction de la valeur optimale.

4. Procédé selon l'une quelconque des revendications 1, 2 ou 3, **caractérisé en ce qu'**on ne varie à chaque fois seulement qu'une seule grandeur d'entrée, si l'un des points environnants sur la trame grossière n'est pas réglable ou **en ce qu'**on varie simultanément toutes les grandeurs d'entrée, si ce cas ne se présente pas, et **en ce qu'**on procède à la détermination de la valeur et **en ce que** l'ajustement avec la fonction de modélisation est assuré séparément pour chaque grandeur d'entrée variée et après variation de toutes les grandeurs d'entrée, le système est placé pour l'étape suivante sur l'association des grandeurs d'entrée qui sont le plus proches de la valeur optimale pour la grandeur de sortie.

5. Procédé selon l'une quelconque des revendications 1, 2 ou 3, **caractérisé en ce que** successivement, on règle toutes les associations possibles de grandeurs d'entrée dans une plage déterminée autour du point de départ du deuxième stade et on balaye de ce fait la marge de variables dans la plage choisie.

6. Procédé selon l'une quelconque des revendications 3 à 5, **caractérisé en ce qu'**on répète les étapes du deuxième stade jusqu'à ce que le système soit finalement réglé sur les variables, qui sous respect des conditions secondaires fournissent la valeur optimale pour la grandeur de sortie dans la plage choisie.

7. Procédé selon l'une quelconque des revendications 3 à 6, **caractérisé en ce que** la variation des grandeurs d'entrée pour le deuxième stade est assurée en plusieurs étapes, au maximum de la valeur du montant qui correspond à la grandeur prédéfinie du premier stade.

8. Procédé selon l'une quelconque des revendications précédentes, **caractérisé en ce qu'**on ajuste les valeurs issues du système avec des fonctions de modélisation au maximum de $2^{\text{ème}}$ ordre.

9. Procédé selon la revendication 8, **caractérisé en ce qu'**on ajuste les valeurs issues du système dans la première étape du premier stade avec une fonction de modélisation de $1^{\text{er}}$ ordre.

10. Procédé selon l'une quelconque des revendications précédentes, **caractérisé en ce qu'**à chaque variation d'une grandeur d'entrée, on supervise le système, on arrête et on annule les variations lors du dépassement de valeurs limites prédéfinies pour des conditions secondaires prescrites et on sauvegarde dans une mémoire de données les associations des grandeurs d'entrée non réalisées du fait de cette intervention, et on les bloque pour l'optimisation ultérieure.

**Fig. 1**

**Fig. 2**

**Fig. 3**